# EUROPEAN PATENT APPLICATION

(11) **EP 4 632 941 A1**
(43) Date of publication of application: **15.10.2025**
(21) Application number: 23902340.1
(22) Date of filing: 31.10.2023
(51) Int. Cl.: H01M 50/543, H01M 50/147, H01M 50/172

(54) **POLE ASSEMBLY, END COVER ASSEMBLY, BATTERY, ENERGY STORAGE APPARATUS, AND ELECTRIC DEVICE**

(30) Priority: 16.12.2022 CN 202211625859
(71) Applicant: Xiamen Hithium Energy Storage Technology Co., Ltd., Xiamen, Fujian 361100 (CN)
(72) Inventor: LIANG, Jinyun, Xiamen, Fujian 361100 (CN)
(74) Representative: Ipside
(86) International application number: PCT/CN2023/128858
(87) International publication number: WO 2024/125140

(57) **Abstract**

A terminal-post assembly, an end cover assembly, a battery, an energy-storage apparatus, and an electricity-consumption device are provided in the disclosure. The terminal-post assembly includes a terminal post and a sealing ring. The terminal post includes a terminal-post body, a base, and a terminal cap. One end of the terminal-post body is connected to the base, and the other end of the terminal-post body is connected to the terminal cap. A cross-sectional area of the terminal-post body is smaller than a cross-sectional area of the base, and the cross-sectional area of the terminal-post body is smaller than a cross-sectional area of the terminal cap. The sealing ring is sleeved on a periphery of the terminal-post body and located on an upper surface of the base. The sealing ring includes a sealing-ring body and multiple first limiting structures. The multiple first limiting structures are disposed at one side of the sealing-ring body positioned facing towards an axis of the sealing ring, and the multiple first limiting structures are spaced apart from each other in a circumferential direction of the sealing-ring body. The terminal-post assembly provided in the disclosure can solve the technical problem in the related art that a sealing ring is prone to dislocation or overturning and thus the safety performance of the battery is affected.

## Description

### CROSS-REFERENCE TO RELATED APPLICATION(S)

This application claims priority to Chinese Patent Application No. 202211625859.2, filed with the China National Intellectual Property Administration on December 16, 2022 and entitled "TERMINAL-POST ASSEMBLY, END COVER ASSEMBLY, BATTERY, ENERGY-STORAGE APPARATUS, AND ELECTRICITY-CONSUMPTION DEVICE", the entire disclosure of which is hereby incorporated by reference.

### TECHNICAL FIELD

This disclosure relates to the field of battery technology, and in particular, to a terminal-post assembly, an end cover assembly, a battery, an energy-storage apparatus, and an electricity-consumption device.

### BACKGROUND

Rechargeable and dischargeable batteries are widely used in fields such as electric vehicles and mobile devices due to the advantages of a high energy density, a high power density, a large number of cycles, a long storage time, and the like.

A sealing ring is an important sealing structure in a battery terminal-post assembly. After an existing sealing ring is sleeved on a terminal post, the sealing ring may be prone to dislocation or overturning during the injection molding or the processing and transporting of a semi-finished product, resulting in poor airtightness of the terminal-post assembly and battery leakage, which greatly affects the safety performance of the battery.

### SUMMARY

A terminal-post assembly, an end cover assembly, a battery, an energy-storage apparatus, and an electricity-consumption device are provided in the disclosure, so as to solve the technical problem in the related art that a sealing ring is prone to dislocation or overturning and thus the safety performance of the battery is affected.

To solve the above problem, in a first aspect, a terminal-post assembly is provided in the disclosure. The terminal-post assembly includes a terminal post and a sealing ring. The terminal post includes a terminal-post body, a base, and a terminal cap. One end of the terminal-post body is connected to the base, and the other end of the terminal-post body is connected to the terminal cap. A cross-sectional area of the terminal-post body is smaller than a cross-sectional area of the base, and the cross-sectional area of the terminal-post body is smaller than a cross-sectional area of the terminal cap. The sealing ring is sleeved on a periphery of the terminal-post body and located on an upper surface of the base. The sealing ring includes a sealing-ring body and multiple first limiting structures. The multiple first limiting structures are disposed at one side of the sealing-ring body positioned facing towards an axis of the sealing ring, and the multiple first limiting structures are spaced apart from each other in a circumferential direction of the sealing-ring body.

Since the multiple first limiting structures are spaced apart from each other in a circumferential direction of the sealing-ring body at one side of the sealing-ring body positioned facing towards the axis of the sealing ring, after the sealing ring is assembled with the terminal post, the multiple first limiting structures can provide a uniform limiting and supporting force for the terminal-post body. As such, the offset degree between the sealing ring and the terminal post is greatly reduced, and the probability of dislocation or overturning of the sealing ring is reduced, so that the sealing performance of the sealing ring in an end cover assembly is better utilized, and the safety performance of the battery is ensured.

In a second aspect, an end cover assembly is provided in the disclosure. The end cover assembly includes an upper plastic member, an end cover, a lower plastic member, and at least one terminal-post assembly above. The end cover is stacked with the lower plastic member. The end cover defines a first through-hole for the terminal-post body and the terminal cap to pass through. The lower plastic member defines a second through-hole for the terminal-post body and the terminal cap to pass through. The sealing ring is located between the second through-hole and the terminal-post body, and the sealing ring is in interference fit with the end cover. The base is located on a lower surface of the lower plastic member, the terminal-post body passes through the second through-hole and the first through-hole, and the terminal cap is connected to the upper plastic member. The upper plastic member includes a first part, a second part, and a third part where the second part is connected between the first part and the third part. The first part covers a sidewall surface of the end cover and part of an upper surface of the end cover close to the terminal-post body. The second part is located in a gap between the sidewall surface of the end cover and a sidewall surface of the terminal-post body. The third part is located below a part of the end cover close to the terminal-post body, and the third part is located in a gap between the sealing-ring body and the terminal-post body.

During injection of the upper plastic member, one end of the end cover is partially pressed against an upper surface of the sealing-ring body to form a certain abutting force on the sealing ring, and an injection fluid flows into the gap between the sidewall surface of the end cover and the sidewall surface of the terminal-post body, thereby realizing a tight connection of the end cover-the upper plastic member-the terminal post. The injection fluid continues flowing below a part of the end cover into the gap between the sealing-ring body and the terminal-post body. After the injection is completed, a lower surface of the third part of the upper plastic member is in contact with an upper surface of the base, a sidewall surface of one end of the third part of the upper plastic member is connected to a sidewall surface of the terminal post, and a sidewall surface of the other end of the third part of the upper plastic member is connected to an inner ring surface of the sealing-ring body and sidewall surfaces of the first limiting structures. After the injection, the upper plastic member abuts against each of the end cover, the sealing ring, and the terminal post, so that the sealing ring and the terminal post fit more tightly and reliably. Therefore, the occurrence of dislocation and overturning of the sealing ring during assembling is fully reduced, the sealing effect of the sealing ring is ensured, the air leakage or liquid leakage of the end cover assembly is reduced, and the safety performance of the battery is ensured.

In a third aspect, a battery is provided in the disclosure. The battery includes at least one end cover assembly above.

In a fourth aspect, an energy-storage apparatus is provided in the disclosure. The energy-storage apparatus includes at least one battery above.

In a fifth aspect, an electricity-consumption device is provided in the disclosure. The electricity-consumption device includes at least one energy-storage apparatus above.

As above mentioned, since the multiple first limiting structures are spaced apart from each other in a circumferential direction of the sealing-ring body at one side of the sealing-ring body positioned facing towards the axis of the sealing ring, after the sealing ring is assembled with the terminal post, the multiple first limiting structures can provide a uniform limiting and supporting force for the terminal-post body. As such, the offset degree between the sealing ring and the terminal post is greatly reduced, and the probability of dislocation or overturning of the sealing ring is reduced, so that the sealing performance of the sealing ring in the end cover assembly is better utilized, and the safety performance of the battery is ensured.

### BRIEF DESCRIPTION OF THE DRAWINGS

In order to more clearly describe technical solutions in the background or embodiments of the disclosure, the following will describe the accompanying drawings required for the background or embodiments of the disclosure.
FIG. 1 is a schematic structural view of an electricity-consumption device provided in an embodiment of the disclosure.
FIG. 2 is a schematic structural view of an energy-storage apparatus in the electricity-consumption device illustrated in FIG. 1.
FIG. 3 is a schematic structural view of a battery in the energy-storage apparatus illustrated in FIG. 2.
FIG. 4 is an exploded schematic view of the battery illustrated in FIG. 3.
FIG. 5 is a schematic structural view of an end cover assembly in the battery illustrated in FIG. 3.
FIG. 6 is an exploded schematic view of the end cover assembly illustrated in FIG. 5.
FIG. 7 is a schematic cross-sectional structural view of the end cover assembly illustrated in FIG. 5.
FIG. 8 is a schematic structural view of a terminal-post assembly in the end cover assembly illustrated in FIG. 5.
FIG. 9 is an exploded schematic view of the terminal-post assembly illustrated in FIG. 8.
FIG. 10 is a schematic structural view of a sealing ring provided in a first embodiment of the disclosure.
FIG. 11 is a schematic structural view of a sealing ring provided in a second embodiment of the disclosure.
FIG. 12 is a schematic structural view of a sealing ring provided in a third embodiment of the disclosure.
FIG. 13 is a schematic structural view of a sealing ring provided in a fourth embodiment of the disclosure.

### Reference signs:

electricity-consumption device 400, device body 410,
energy-storage apparatus 300, housing 310,
battery 200,
end cover assembly 100, cell 110, casing 120, protective film 121, connector 130,
terminal-post assembly 20,
terminal post 30, terminal cap 31, terminal-post body 32, base 33, recess 34, welding step 35,
sealing ring 40, sealing-ring body 41, first limiting structure 42, end portion 43, connecting section 44, bottom portion 45, first rounded corner 43a, second rounded corner 45a, arc surface 43b,
end cover 50, first through-hole 51, third through-hole 52, fifth through-hole 53,
lower plastic member 60, second through-hole 61, fourth through-hole 62, sixth through-hole 63, raised portion 64,
upper plastic member 70, first part 71, second part 72, third part 73,
explosion-proof valve 80, explosion-proof valve protection sheet 81.

### DETAILED DESCRIPTION

The following will describe embodiments of the disclosure with reference to the accompanying drawings.

A terminal-post assembly, an end cover assembly, a battery, an energy-storage apparatus, and an electricity-consumption device are provided in embodiments of the disclosure.

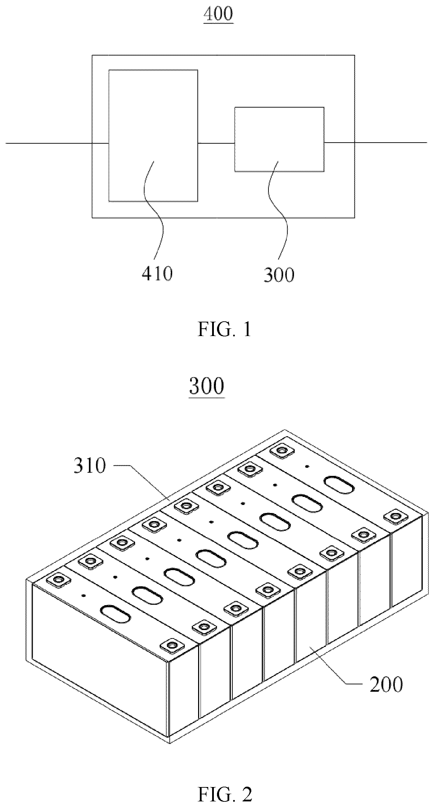

Reference can be made to FIG. 1, where FIG. 1 is a schematic structural view of an electricity-consumption device 400 provided in an embodiment of the disclosure. The electricity-consumption device 400 includes a device body 410 and an energy-storage apparatus 300. The energy-storage apparatus 300 can supply power to various apparatuses requiring electricity in the device body 410, so as to satisfy operation requirements of the electricity-consumption device 400. The energy-storage apparatus 300 may be implemented as one or more energy-storage apparatuses. When the energy-storage apparatus 300 is implemented as multiple energy-storage apparatuses, the multiple energy-storage apparatuses 300 may be connected to each other in series, in parallel, or in a mixture of series and parallel to realize large capacity and power.

The electricity-consumption device 400 may be a vehicle or an unmanned aerial vehicle. The vehicle includes, but is not limited to, a pure electric vehicle/battery electric vehicle (PEV/BEV), a hybrid electric vehicle (HEV), a range extended electric vehicle (REEV), a plug-in hybrid electric vehicle (PHEV), or a new energy vehicle.

Reference can be made to FIG. 2, where FIG. 2 is a schematic structural view of an energy-storage apparatus 300 in the electricity-consumption device 400 illustrated in FIG. 1. The energy-storage apparatus 300 includes a housing 310 and multiple batteries 200. The multiple batteries 200 are electrically connected and are all located inside the housing 310, which can be protected by the housing 310 from interference of the external environment. In this embodiment, the energy-storage apparatus 300 includes multiple batteries 200. The multiple batteries 200 are spaced apart from each other. The multiple batteries 200 may be connected to each other in series, in parallel, or in a mixture of series and parallel to realize large capacity and power.

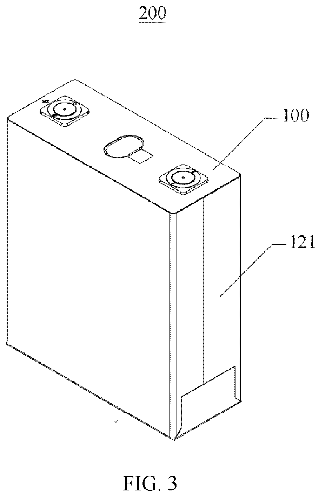

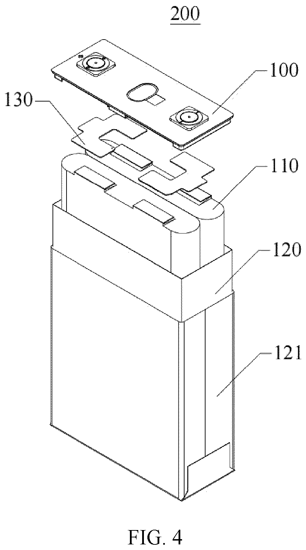

Reference can be made to FIG. 3 and FIG. 4, where FIG. 3 is a schematic structural view of a battery 200 in FIG. 2, and FIG. 4 is an exploded schematic view of the battery 200 illustrated in FIG. 3.

The battery 200 is a secondary battery, for example, a nickel-metal hydride battery, a nickel-cadmium battery, a lead-acid (or lead-storage) battery, a lithium-ion battery, a polymer lithium-ion battery, or the like. In other embodiments, the battery may also be a lithium-ion primary battery, a lithium-sulfur battery, a sodium lithium-ion battery, a sodium-ion battery, a magnesium-ion battery, or the like.

In this embodiment, the battery 200 is cuboid. In other embodiments, the battery 200 may also be cylindrical or in other shapes. The battery 200 includes an end cover assembly 100, a cell 110, a connector 130, and a casing 120. A protective film 121 may be further attached to a surface of the casing 120. The cell 110 is located inside the casing 120, which can be protected by the casing 120 and the protective film 121 from interference of the external environment. The cell 110 is connected to the end cover assembly 100 through the connector 130.

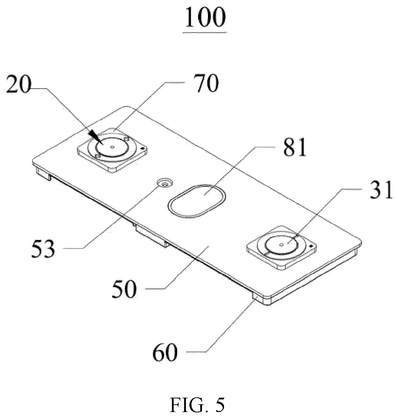

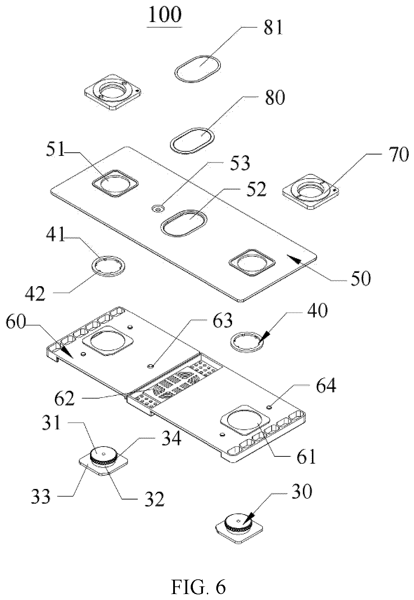

Reference can be made to FIG. 5 and FIG. 6, where FIG. 6 is an exploded schematic view of the end cover assembly 100 illustrated in FIG. 5. The end cover assembly 100 includes: a terminal-post assembly 20, an end cover 50, a lower plastic member 60, an upper plastic member 70, and an explosion-proof valve 80.

The terminal-post assembly 20 may be implemented as two terminal-post assemblies, and the two terminal-post assemblies 20 may be a positive terminal-post assembly and a negative terminal-post assembly respectively. When the positive terminal-post assembly and the negative terminal-post assembly have different structures, one of the positive terminal-post assembly and the negative terminal-post assembly is the terminal-post assembly 20. When the positive terminal-post assembly and the negative terminal-post assembly have the same structure, each of the positive terminal-post assembly and the negative terminal-post assembly is the terminal-post assembly 20. In this embodiment, the positive terminal-post assembly and the negative terminal-post assembly have the same structure. The following will take only one terminal-post assembly 20 as an example for elaboration. Any of the following descriptions of the one terminal-post assembly 20 may be applied to the other terminal-post assembly in a case of no conflict.

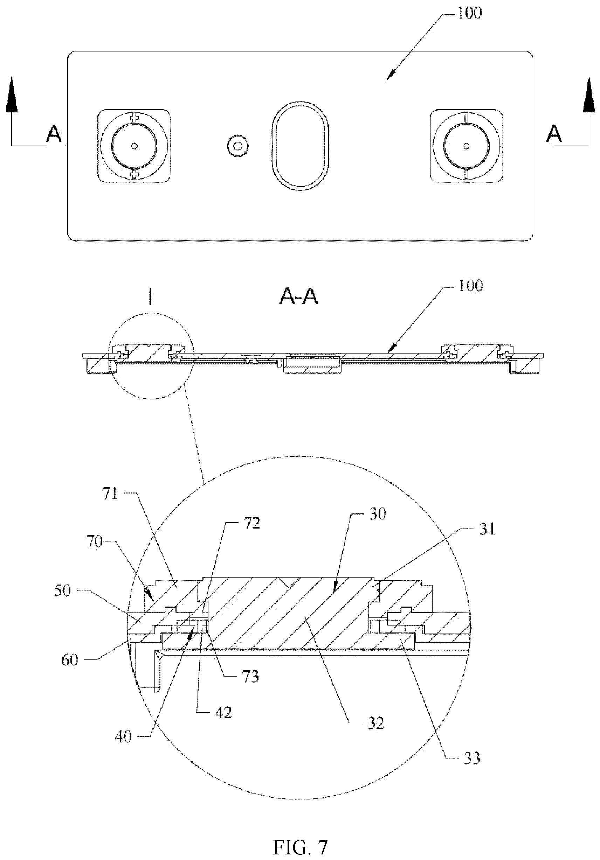

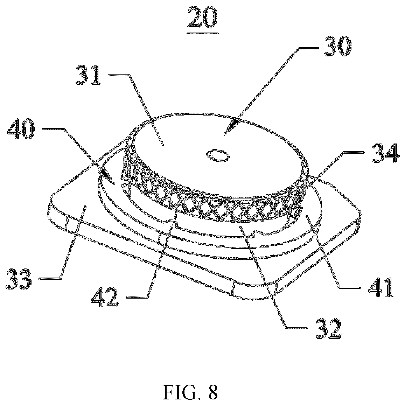

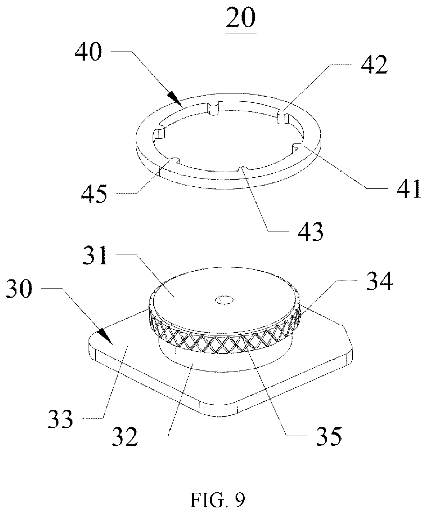

Reference can be made to FIG. 7, FIG. 8, and FIG. 9, where FIG. 7 is a cross-sectional view of the end cover assembly 100 illustrated in FIG. 5, taken along line A-A illustrated in the figure, FIG. 8 is a schematic structural view of a terminal-post assembly 20 illustrated in FIG. 5, and FIG. 9 is an exploded schematic view of the terminal-post assembly 20 illustrated in FIG. 5.

The terminal-post assembly 20 includes a terminal post 30 and a sealing ring 40.

The terminal post 30 includes a terminal-post body 32, a base 33, and a terminal cap 31. The terminal cap 31 and the base 33 are respectively located at two opposite ends of the terminal-post body 32, one end of the terminal-post body 32 is connected to the base 33, and the other end of the terminal-post body 32 is connected to the terminal cap 31. A cross-sectional area of the terminal-post body 32 is smaller than a cross-sectional area of the base 33, and the cross-sectional area of the terminal-post body 32 is smaller than a cross-sectional area of the terminal cap 31. That is, a projection of the terminal-post body 32 on the base 33 falls within the base 33, and a projection of the terminal-post body 32 on the terminal cap 31 falls within the terminal cap 31. The cross-sectional area of the terminal cap 31 is smaller than or equal to the cross-sectional area of the base 33. The above cross-sectional area is a cross-sectional area taken along a plane parallel to a plane where the base 33 is located. Exemplarily, the cross-sectional area of the terminal cap 31 is smaller than the cross-sectional area of the base 33. In this embodiment, the terminal-post body 32 and the terminal cap 31 are both cylindrical. A height of the base 33 and a height of the terminal cap 31 are smaller than a height of the terminal-post body 32. By setting the height of the base 33 and the height of the terminal cap 31 to be smaller than the height of the terminal-post body 32, the space occupation of the base 33 in the end cover assembly 100 can be reduced, and the volume energy density of the battery 200 can be improved.

A second limiting structure is positioned around a sidewall surface of the terminal cap 31, and the second limiting structure may be a protrusion or a recess. Exemplarily, the second limiting structure is a recess 34. By providing the second limiting structure, a contact area between the terminal cap 31 and other components can be increased, the connection strength between the terminal post 30 and other components can be improved, and twisting of the terminal post 30 can be prevented. A welding step 35 is further disposed at one end of the terminal cap 31 away from the base 33. The welding step 35 is provided to facilitate fixing of the terminal post 30 by a welding fixture, thereby reducing an impact force on the terminal post 30 during welding, and avoiding affecting the structural reliability of the terminal post 30 and the assembly strength of the end cover assembly 100.

The sealing ring 40 is sleeved on a periphery of the terminal-post body 32 and located on an upper surface of the base 33. The upper surface of the base 33 refers to a surface of the base 33 positioned facing towards the terminal cap 31. The sealing ring 40 includes a sealing-ring body 41 and multiple first limiting structures 42. The multiple first limiting structures 42 are disposed at one side of the sealing-ring body 41 positioned facing towards an axis of the sealing ring 40, and the multiple first limiting structures 42 are spaced apart from each other in a circumferential direction of the sealing-ring body 41. Preferably, the multiple first limiting structures 42 are arranged at equal intervals in the circumferential direction of the sealing-ring body 41. In a thickness direction of the sealing-ring body 41, cross-sectional areas of each of the first limiting structures 42 at different thickness positions of the sealing-ring body 41 are equal. The above cross-sectional area is a cross-sectional area taken along a plane parallel to a plane where the base 33 is located. That is to say, in the thickness direction of the sealing-ring body 41, each of the first limiting structures 42 has a cylindrical shape. Each of the first limiting structures 42 has an end portion 43 and a bottom portion 45. The bottom portion 45 is one end of the first limiting structure 42 connected to the sealing-ring body 41, and the end portion 43 is one end of the first limiting structure 42 away from the sealing-ring body 41. The end portion 43 is in clearance fit or interference fit with the terminal-post body 32. It may be understood that after the sealing ring 40 is assembled with the terminal post 30, for the multiple first limiting structures 42, all of the end portions 43 of the first limiting structures 42 may be in clearance fit with the terminal-post body 32, or all of the end portions 43 of the first limiting structures 42 may be in interference fit with the terminal-post body 32; and alternatively, part of the end portions 43 of the first limiting structures 42 is in clearance fit with the terminal-post body 32, or part of the end portions 43 of the first limiting structures 42 is in interference fit with the terminal-post body 32.

A structure of a sealing ring in the related art generally includes only a sealing-ring body. It has been found by the inventor that after the sealing ring in the related art is assembled with the terminal post, a concentricity between the sealing ring and the terminal post is generally between 1.95 and 2.05. The concentricity refers to a distance between a center of the sealing ring and a center of the terminal-post body. When the concentricity is equal to 0, it indicates that the center of the sealing ring completely coincides with the center of the terminal-post body, that is, an axis of the sealing ring coincides with an axis of the terminal-post body, and the sealing ring is coaxial with the terminal post. When the concentricity is greater than 0, it indicates that the center of the sealing ring is offset from the center of the terminal-post body. The larger concentricity indicates the larger distance between the center of the sealing ring and the center of the terminal-post body and the larger offset degree between the sealing ring and the terminal post. In this embodiment, since the multiple first limiting structures 42 are spaced apart from each other in a circumferential direction of the sealing-ring body 41 at one side of the sealing-ring body 41 positioned facing towards the axis of the sealing ring 40, after the sealing ring 40 is assembled with the terminal post 30, the multiple first limiting structures 42 can provide a uniform limiting and supporting force for the terminal-post body 32. As such, the concentricity between the sealing ring 40 and the terminal post 30 ranges from 0 mm to 0.15 mm (including endpoint values of 0 mm and 15 mm), i.e., the distance between the center of the sealing ring 40 and the center of the terminal-post body 32 ranges from 0 mm to 0.15 mm (including endpoint values of 0 mm and 15 mm), and the offset degree between the sealing ring 40 and the terminal post 30 is greatly reduced, so that the sealing performance of the sealing ring 40 in the end cover assembly 100 is better utilized.

To facilitate sleeving of the sealing ring 40 on the terminal post 30, a diameter of an inner ring of the sealing-ring body 41 of the sealing ring 40 is larger than or equal to a diameter of the terminal cap 31. When the diameter of the inner ring of the sealing-ring body 41 of the sealing ring 40 is smaller than the diameter of the terminal cap 31, it is difficult for the sealing ring 40 to be sleeved on the terminal cap 31, and even if the sealing ring 40 is sleeved on the terminal cap 31 with difficulty, the sealing ring 40 is easily stuck on a sidewall surface of the terminal-post body 32, so that the sealing ring 40 cannot perform a sealing function and fails. When the diameter of the inner ring of the sealing-ring body 41 of the sealing ring 40 is much larger than the diameter of the terminal cap 31, after the sealing ring 40 is sleeved on the terminal cap 31, a gap between the sealing ring 40 and the terminal-post body 32 is too large, so that the terminal-post assembly 20 occupies a large space, the risk of dislocation of the sealing ring 40 also increases, and the sealing reliability of the sealing ring 40 is affected. Exemplarily, the diameter of the inner ring of the sealing-ring body 41 of the sealing ring 40 is slightly larger than the diameter of the terminal cap 31. For example, a distance between a projection of the sealing-ring body 41 on the base 33 and a projection of the terminal cap 31 on the base 33 may be set to be smaller than or equal to 0.1 mm, that is, a difference between the diameter of the inner ring of the sealing-ring body 41 of the sealing ring 40 and the diameter of the terminal cap 31 is smaller than or equal to 0.1 mm. As such, during sleeving of the sealing ring 40 on the terminal post 30 in a direction from the terminal cap 31 to the base 33, as long as a slight force is applied to cause the first limiting structures 42 to avoid the terminal cap 31, the sealing ring 40 can be sleeved on the terminal cap 31 and drop onto the upper surface of the base 33 along the terminal-post body 32.

In a possible implementation, after the sealing ring 40 is assembled with the terminal post 30, the end portion 43 of each of the first limiting structures 42 is in clearance fit or interference fit with the terminal-post body 32. Exemplarily, after the sealing ring 40 is assembled with the terminal post 30, when the end portion 43 of each of the first limiting structures 42 is in clearance fit with the terminal-post body 32, a gap between the end portion 43 and the terminal-post body 32 ranges from 0.05 mm to 0.15 mm. By providing a certain gap between the end portion 43 and the terminal-post body 32, it can be ensured that the sealing ring 40 successfully reaches the upper surface of the base 33, and the probability that the first limiting structures 42 are stuck on a sidewall surface of the terminal post 30 is reduced. When the gap **between** the end portion 43 and the terminal-post body 32 is too large, the limiting and fixing effect of the first limiting structures 42 on the terminal post 30 is poor, and the risk of dislocation of the sealing ring 40 also increases.

In a possible implementation, a surface of the end portion 43 positioned facing towards the terminal-post body 32 is an arc surface (not illustrated) recessed in a direction away from the terminal-post body 32, that is, a sidewall surface of the end portion 43 is an arc surface recessed in the direction away from the terminal-post body 32. A radius of the arc surface is *r,* a diameter of the terminal-post body 32 is *D,* and a ratio *t* of the radius *r* of the arc surface to the diameter *D* of the terminal-post body 32 satisfies 1/4 ≤ *t* ≤ 3/4. The radius of the arc surface refers to a radius of a circle where the arc surface is located. When *t* satisfies 1/4 ≤ *t* ≤ 3/4, the fitness of the sidewall surface of the end portion 43 with the sidewall surface of the terminal-post body 32 is better, and the supporting and limiting effect of the sealing ring 40 on the terminal post 30 is increased. When the radius *r* of the arc surface is too small and thus *t <* 1/4, the curvature of the arc surface is too large, a contact surface between the arc surface and the sidewall surface of the terminal-post body 32 is greatly reduced, and even a surface contact is changed to a point contact, which is not conducive to the supporting and limiting of the first limiting structures 42 on the terminal post 30. When the radius *r* of the arc surface is too large and thus *t >* 3/4, the curvature of the arc surface is too small, the fitness of the arc surface with the sidewall surface of the terminal-post body 32 is poor, and a distance between the arc surface and the sidewall surface of the terminal-post body 32 decreases and then increases, which is also not conducive to the supporting and limiting of the first limiting structures 42 on the terminal post 30.

An end cover 50 may be square, circular, or in other shapes. Exemplarily, the end cover 50 is square. The end cover 50 defines a first through-hole 51 for the terminal-post body 32 of the terminal post 30 to pass through, a third through-hole 52 for connecting an explosion-proof valve 80, and a fifth through-hole 53 for liquid injection. An area of the first through-hole 51 is larger than the cross-sectional area of the terminal-post body 32 and the cross-sectional area of the terminal cap 31, and is smaller than the cross-sectional area of the base 33, so as to restrict the terminal-post body 32 from moving out of the first through-hole 51 in a direction of the end cover 50 away from a lower plastic member 60. The above cross-sectional area is a cross-sectional area taken along a plane parallel to a plane where the base 33 is located. The explosion-proof valve 80 is connected to the third through-hole 52, and an explosion-proof valve protection sheet 81 is further provided on an upper surface of the explosion-proof valve 80 to protect the explosion-proof valve 80 from interference of the external environment.

The lower plastic member 60 may be square, circular, or in other shapes, and the lower plastic member 60 and the end cover 50 have the same shape. Exemplarily, both the lower plastic member 60 and the end cover 50 are square. The lower plastic member 60 is stacked with the end cover 50. The lower plastic member 60 defines a second through-hole 61 for the terminal-post body 32 of the terminal post 30 to pass through, a fourth through-hole 62 for communication with the third through-hole 52, and a sixth through-hole 63 for communication with the fifth through-hole 53. An area of the second through-hole 61 is larger than the cross-sectional area of the terminal-post body 32 and the cross-sectional area of the terminal cap 31, and is smaller than the cross-sectional area of the base 33, so as to restrict the terminal-post body 32 from moving out of the second through-hole 61 in a direction of the lower plastic member 60 positioned facing towards the end cover 50. The above cross-sectional area is a cross-sectional area taken along a plane parallel to a plane where the base 33 is located.

Further, the connection effect between the lower plastic member 60 and the end cover 50 can be enhanced by a reinforcing structure. The reinforcing structure may be a fitting structure of a raised portion and a recessed portion. The recessed portion/raised portion 64 is located at one side of the lower plastic member positioned facing towards the end cover, and the raised portion 64/recessed portion is located at one side of the end cover positioned facing towards the lower plastic member. Exemplarily, the lower plastic member 60 is provided with a raised portion 64, and accordingly, the end cover 50 is provided with a recessed portion (not illustrated) that is in fit with the raised portion 64. The raised portion 64 and the recessed portion are in fit with each other to enhance the connection effect between the lower plastic member 60 and the end cover 50.

The upper plastic member 70 is configured to fill a gap between the end cover 50, the sealing ring 40, and the terminal post 30, so as to position and fix the terminal post 30 and ensure the insulation performance between the terminal post 30 and the end cover 50. Exemplarily, during assembling of the end cover assembly 100, the base 33 is located on a lower surface of the lower plastic member 60, the sealing ring 40 is sleeved on a periphery of the terminal-post body 32 in a direction from the terminal cap 31 to the base 33, the terminal-post body 32 and the terminal cap 31 sequentially pass through the second through-hole 61 of the lower plastic member 60 and the first through-hole 51 of the end cover 50, and then a semi-finished product of the assembled end cover 50 is placed into an injection mold to be fixed and the upper plastic member 70 is injected. An injection fluid may flow into, seal, and fill the gap between the end cover 50, the sealing ring 40, and the terminal post 30. After the injection is completed, the upper plastic member 70 in the end cover assembly 100 includes a first part 71, a second part 72, and a third part 73 where the second part is connected between the first part and the third part. The first part 71 covers a sidewall surface of the end cover 50 and part of an upper surface of the end cover 50 close to the terminal-post body 32. The second part 72 is located in a gap (a region between two dashed straight lines in FIG. 7) between the sidewall surface of the end cover 50 and a sidewall surface of the terminal-post body 32. The third part 73 is located below a part of the end cover 50 close to the terminal-post body 32, and the third part 73 is located in a gap between the sealing-ring body 41 and the terminal-post body 32.

Exemplarily, the injection fluid can be filled into the recess 34 positioned on the sidewall surface of the terminal cap 31, so as to increase a contact area between the first part 71 and the terminal cap 31, so that the upper plastic member 70 is tightly connected to the terminal cap 31, thereby ensuring the reliability of connection between the upper plastic member 70 and the terminal post 30. Further, an upper surface of the first part 71 may be flush with an upper surface of the terminal cap 31, but lower than the welding step 35 of the terminal cap 31. When the welding step 35 of the terminal cap 31 is welded with an external component, the influence on a connection position between the upper plastic member 70 and the terminal-post body 32 can be reduced.

It may be understood that during injection of the upper plastic member 70, one end of the end cover 50 is partially pressed against an upper surface of the sealing-ring body 41 to form a certain abutting force on the sealing ring 40, and an injection fluid flows into the gap between the sidewall surface of the end cover 50 and the sidewall surface of the terminal-post body 32, thereby realizing a tight connection of the end cover 50-the upper plastic member 70-the terminal post 30. Certainly, a reinforcing structure (for example, a shallow recess or a rough surface, etc., which is not illustrated) may be further provided on the sidewall surface of the end cover 50 and the sidewall surface of the terminal-post body 32, so as to increase a contact area with the upper plastic member 70 and improve the connection strength. The injection fluid continues flowing below a part of the end cover 50 into the gap between the sealing-ring body 41 and the terminal-post body 32. After the injection is completed, a lower surface of the third part 73 of the upper plastic member 70 is in contact with an upper surface of the base 33, a sidewall surface of one end of the third part 73 of the upper plastic member 70 is connected to a sidewall surface of the terminal post 30, and a sidewall surface of the other end of the third part 73 of the upper plastic member 70 is connected to an inner ring surface of the sealing-ring body 41 and sidewall surfaces of the first limiting structures 42. After the injection, the upper plastic member 70 abuts against each of the end cover 50, the sealing ring 40, and the terminal post 30, so that the sealing ring 40 and the terminal post 30 fit more tightly and reliably. Therefore, the occurrence of dislocation and overturning of the sealing ring 40 during assembling is fully reduced, the sealing effect of the sealing ring 40 is ensured, the air leakage or liquid leakage of the end cover assembly 100 is reduced, and the safety performance of the battery 200 is ensured.

The specific structure of the sealing ring 40 will be described below through several different embodiments.

### First embodiment

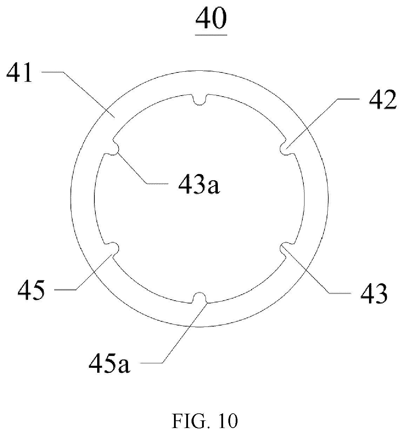

Reference can be made to FIG. 10, where FIG. 10 is a schematic structural view of a sealing ring 40 provided in a first embodiment of the disclosure.

In this embodiment, a width of the bottom portion 45 is larger than a width of the end portion 43. The width of the bottom portion 45 refers to a distance between a connection of one of two ends of the bottom portion 45 and the sealing-ring body 41 and a connection of the other of the two ends of the bottom portion 45 and the sealing-ring body 41. In a direction from the bottom portion 45 to the end portion 43, a width of the first limiting structure 42 may gradually decrease or may gradually decrease first and then gradually increase, or a width between the bottom portion 45 and the end portion 43 may be designed following a combination of decreasing, remaining the same, or increasing, but it is always ensured that the width of the bottom portion 45 is larger than the width of the end portion 43. In summary, the width of the bottom portion 45 is larger than the width of the end portion 43. Exemplarily, the width of the first limiting structure 42 gradually decreases in the direction from the bottom portion 45 to the end portion 43. With a structural design in which the end portion 43 is narrow and the bottom portion 45 is wide, for one thing, a contact area between the end portion 43 and an injection mold of the sealing ring 40 can be made small to facilitate separation of the end portion 43 from the injection mold after the injection. For another thing, the bottom portion 45 and the sealing-ring body 41 can also be prevented from being pulled and broken during demolding, thereby ensuring the connection strength between the bottom portion 45 and the sealing-ring body 41 and the molding yield of the first limiting structure 42.

The end portion 43 further defines a first rounded corner 43a, that is, the sidewall surface of the end portion 43 is an arc surface 43b, and a circle where the first rounded corner 43a is located has a radius ranging from 0.2 mm to 1 mm. The bottom portion 45 defines a second rounded corner 45a, that is, the connection between the first limiting structure 42 and the sealing-ring body 41 is a circular arc transition face, and a circle where the second rounded corner 45a is located has a radius ranging from 0.2 mm to 1 mm. By providing the first rounded corner 43a and the second rounded corner 45a, a smooth transition between the end portion 43 and the bottom portion 45 facilitates the injection fluid during the injection molding of the sealing ring 40, so as to obtain a shape of the first limiting structure 42 of an intended design through the injection molding, thereby reducing the occurrence of short shot and flashing of the end portion 43 and the bottom portion 45, and ensuring the assembling compatibility and sealing performance of the sealing ring 40 with other components.

The first limiting structure 42 is implemented as six first limiting structures. The six first limiting structures 42 are disposed at one side of the sealing-ring body 41 positioned facing towards an axis of the sealing ring 40, and the six first limiting structures 42 are arranged at equal intervals in a circumferential direction of the sealing-ring body 41.

### Second embodiment

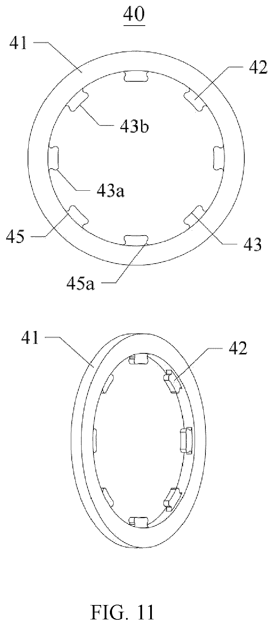

Reference can be made to FIG. 11, where FIG. 11 is a schematic structural view of a sealing ring 40 provided in a second embodiment of the disclosure.

In this embodiment, the same content as that in the first embodiment will not be repeated, and different from the first embodiment, a width of the bottom portion 45 is equal to a width of the end portion 43. In a direction from the bottom portion 45 to the end portion 43, a width of the first limiting structure 42 may remain the same or may gradually decrease first and then gradually increase, or a width between the bottom portion 45 and the end portion 43 may be designed following a combination of decreasing, remaining the same, or increasing, but it is always ensured that the width of the bottom portion 45 is equal to the width of the end portion 43. In summary, the width of the bottom portion 45 is equal to the width of the end portion 43. Exemplarily, in the direction from the bottom portion 45 to the end portion 43, the width of the first limiting structure 42 gradually decreases first and then gradually increases. In other words, a projection of the first limiting structure 42 on the base 33 of the terminal post 30 may be in a waisted shape.

Compared with the first embodiment, the width of the end portion 43 is further set to be equal to the width of the bottom portion 45 in this embodiment, so that both the end portion 43 and the bottom portion 45 have a relatively large width. When both the end portion 43 and the bottom portion 45 have a relatively large width, it can be ensured that the bottom portion 45 and the sealing-ring body 41 have a good connection strength, and the end portion 43 can have a large contact surface with the sidewall surface of the terminal post 30, thereby ensuring the supporting and limiting effect of the first limiting structure 42 on the terminal post 30, and improving the coaxiality of the sealing ring 40 and the terminal post 30. A transition region with a relatively small width is positioned between the end portion 43 and the bottom portion 45 to facilitate the folding and avoidance of the first limiting structure 42, so that the sealing ring 40 is sleeved on the terminal cap 31 and the terminal-post body 32. Further, a thickness of the first limiting structure 42 is smaller than or equal to a thickness of the sealing ring 40. Exemplarily, the thickness of the first limiting structure 42 is smaller than the thickness of the sealing ring 40. That is to say, the first limiting structure 42 is disposed at one side of the sealing-ring body 41 positioned facing towards an axis of the sealing ring 40, and the first limiting structure 42 is located between a plane where an upper surface of the sealing ring 40 is located and a plane where a lower surface of the sealing ring 40 is located. Exemplarily, in a thickness direction of the sealing ring 40, the first limiting structure 42 may be disposed at a central position of a sidewall surface of the sealing-ring body 41. Since the smaller the thickness of the first limiting structure 42, the easier the folding of the first limiting structure 42, the thickness of the first limiting structure 42 is set to be smaller than the thickness of the sealing ring 40, and in this case, when it is ensured that the bottom portion 45 and the end portion 43 have a relatively large width, the folding resistance of the first limiting structure 42 can be further reduced. The first limiting structure 42 is centrally disposed in the thickness direction of the sealing ring 40, which can play a fool-proofing role in addition to making the stress on the first limiting structure 42 uniform. The sealing ring 40 can be assembled with the terminal post 30 without strictly distinguishing the upper surface and lower surface of the sealing ring 40, thereby improving the assembling efficiency of the sealing ring 40 and the terminal post 30.

Each of two ends of the end portion 43 defines one first rounded corner 43a, and a circle where the first rounded corner 43a is located has a radius ranging from 0.2 mm to 1 mm. Exemplarily, the circle where the first rounded corner 43a is located has a radius of 0.3 mm. The bottom portion 45 defines a second rounded corner 45a, and a circle where the second rounded corner 45a is located has a radius ranging from 0.2 mm to 1 mm. Exemplarily, the circle where the second rounded corner 45a is located has a radius of 0.25 mm. When the first rounded corners 43a are positioned at the two ends of the end portion 43, not only the uniformity of the injection fluid at corners is ensured during the injection molding of the sealing ring 40, but also a contact surface between the end portion 43 and the terminal-post body 32 is relatively large, thereby ensuring the limiting and supporting effect of the first limiting structure 42 on the sidewall surface of the terminal-post body 32.

In this embodiment, a surface of the end portion 43 positioned facing towards the terminal-post body 32 is an arc surface 43b recessed in a direction away from the terminal-post body 32, that is, a sidewall surface of the end portion 43 is an arc surface 43b recessed in the direction away from the terminal-post body 32. A radius of the arc surface 43b is *r,* a diameter of the terminal-post body 32 is *D,* and a ratio *t* of the radius *r* of the arc surface 43b to the diameter *D* of the terminal-post body 32 satisfies 1/4 ≤ *t* ≤ 3/4. The radius of the arc surface 43b refers to a radius of a circle where the arc surface 43b is located. When *t* satisfies 1/4 ≤ *t* ≤ 3/4, the fitness of the sidewall surface of the end portion 43 with the sidewall surface of the terminal-post body 32 is better, and the supporting and limiting effect of the sealing ring 40 on the terminal post 30 is increased. When the radius *r* of the arc surface 43b is too small and thus *t <* 1/4, the curvature of the arc surface 43b is too large, a contact surface between the arc surface 43b and the sidewall surface of the terminal-post body 32 is greatly reduced, and even a surface contact is changed to a point contact, which is not conducive to the supporting and limiting of the first limiting structures 42 on the terminal post 30. When the radius *r* of the arc surface 43b is too large and thus *t >* 3/4, the curvature of the arc surface 43b is too small, the fitness of the arc surface 43b with the sidewall surface of the terminal-post body 32 is poor, and a distance between the arc surface 43b and the sidewall surface of the terminal-post body 32 decreases and then increases, which is also not conducive to the supporting and limiting of the first limiting structures 42 on the terminal post 30.

The first limiting structure 42 is implemented as eight first limiting structures. The eight first limiting structures 42 are disposed at one side of the sealing-ring body 41 positioned facing towards an axis of the sealing ring 40, and the eight first limiting structures 42 are arranged at equal intervals in a circumferential direction of the sealing-ring body 41.

### Third embodiment

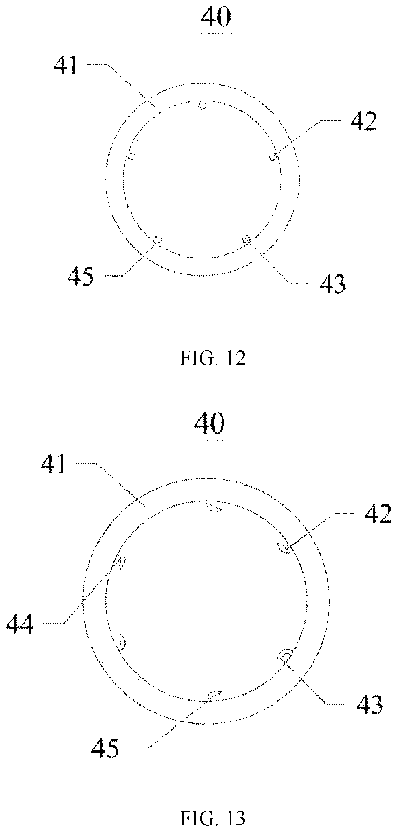

Reference can be made to FIG. 12, where FIG. 12 is a schematic structural view of a sealing ring 40 provided in a third embodiment of the disclosure.

In this embodiment, the same content as that in the first embodiment will not be repeated, and different from the first embodiment, a width of the bottom portion 45 is smaller than a width of the end portion 43. The width of the bottom portion 45 refers to a distance between a connection of one of two ends of the bottom portion 45 and the sealing-ring body 41 and a connection of the other of the two ends of the bottom portion 45 and the sealing-ring body 41. In a direction from the bottom portion 45 to the end portion 43, a width of the first limiting structure 42 may gradually increase or may first increase and then decrease. In summary, the width of the bottom portion 45 is smaller than the width of the end portion 43. Exemplarily, in the direction from the bottom portion 45 to the end portion 43, the width of the first limiting structure 42 gradually increases. When the sealing ring 40 is in interference fit with the terminal post 30, the first limiting structure 42 is folded so that it is difficult for the sealing ring 40 to be quickly sleeved on the terminal post 30. Since the width of the bottom portion is relatively small, a contact area between the bottom portion 45 and the sealing-ring body 41 is relatively small, and the restraining force of the sealing-ring body 41 on the bottom portion 45 is smaller, so that the first limiting structure 42 can be folded in a larger angle range. When the bottom portion 45 is narrow, the larger the folding angle, the larger the reaction force for the first limiting structure 42 to rebound to an initial position. Therefore, with a structural design in which the bottom portion 45 is narrow, not only the difficulty of the folding and avoidance of the first limiting structure 42 can be reduced, but also the flexibility of the first limiting structure 42 to rebound to the initial position after the folding and avoidance of the first limiting structure 42.

The first limiting structure 42 is implemented as five first limiting structures. The five first limiting structures 42 are disposed at one side of the sealing-ring body 41 positioned facing towards an axis of the sealing ring 40, and the five first limiting structures 42 are arranged at equal intervals in a circumferential direction of the sealing-ring body 41.

### Fourth embodiment

Reference can be made to FIG. 13, where FIG. 13 is a schematic structural view of a sealing ring 40 provided in a fourth embodiment of the disclosure.

In this embodiment, the same content as that in the first embodiment will not be repeated, and different from the first embodiment, each first limiting structure 42 further includes a connecting section 44. One end of the connecting section 44 is connected to the bottom portion 45, the other end of the connecting section 44 is connected to the end portion 43, and the connecting section 44 is bent and extended between the bottom portion 45 and the end portion 43. The bending may be one bending or may be multiple bending. When the connecting section 44 is bent once, the bending may be arc-shaped. When the connecting section 44 is bent multiple times, the bending may be S-shaped, Z-shaped, W-shaped, or in other shapes.

Exemplarily, the connecting section 44 is bent once between the bottom portion 45 and the end portion 43, and the bending is arc-shaped. In this case, relative to a center of the sealing ring 40, a single connecting section 44 may be bent in a clockwise direction or a counter-clockwise direction. That is to say, in two adjacent first limiting structures 42, two adjacent connecting sections 44 may be both bent in the clockwise direction, or may be both bent in the counter-clockwise direction. Alternatively, the two adjacent connecting sections 44 may be partially bent in the clockwise direction or partially bent in the counter-clockwise direction. Exemplarily, for the bending directions of the two adjacent connecting sections 44, one is in the clockwise direction, and the other is in the counter-clockwise direction. With a structural design in which the two adjacent connecting sections 44 are bent in opposite directions, the first limiting structures 42 can provide supporting forces on the terminal-post body 32 in different directions, thereby improving the supporting and limiting effect on the terminal post 30.

The first limiting structure 42 is implemented as six first limiting structures. The six first limiting structures 42 are disposed at one side of the sealing-ring body 41 positioned facing towards an axis of the sealing ring 40, and the six first limiting structures 42 are arranged at equal intervals in a circumferential direction of the sealing-ring body 41.

Unless otherwise defined, all technical and scientific terms used herein have the same meaning as commonly understood by those skilled in the art of the disclosure. The terms used herein are for the purpose of describing embodiments only and are not intended to limit the disclosure. The terms of "include" and "have" and any variations thereof in the specification and the claims of the disclosure and in the accompanying drawings are intended to cover the non-exclusive inclusion.

In the elaboration of embodiments of the disclosure, the technical terms such as "first" and "second" are merely intended to distinguish between different objects but not intended to indicate or imply relative importance or implicitly specify the number of the indicated technical features, specific order, or order of precedence. In the elaboration of embodiments of the disclosure, unless otherwise expressly specified, "multiple" means two or more.

The terms of "embodiment" mentioned herein means that the specific features, structures, or characteristics described with reference to the embodiments may be encompassed in at least one embodiment of the disclosure. The phrase at various locations in the specification does not necessarily refer to the same embodiment, or an independent or alternative embodiment exclusive of another embodiment. Those skilled in the art may understand explicitly and implicitly that the embodiments described herein may be combined with other embodiments.

In the elaboration of embodiments of the disclosure, the term "and/or" only describes an association relationship between associated objects, which means that there can be three relationships. For example, A and/or B can mean A alone, both A and B exist, and B alone. In addition, the character "/" herein generally indicates that associated objects are in an "or" relationship.

In the elaboration of embodiments of the disclosure, the orientation or position relationships indicated by the technical terms such as "central", "longitudinal", "transverse", "length", "width", "thickness", "upper", "lower", "front"; "rear", "left", "right", "vertical", "horizontal", "top", "bottom", "inner", "outer", "clockwise", "counter-clockwise", "axial", "radial", "circumferential", etc., are orientation or position relationships based on the accompanying drawings, only for facilitating description of embodiments of the disclosure and simplifying the description, rather than indicating or implying that the referred devices or elements must be in a particular orientation or constructed or operated in the particular orientation, and therefore they may not be construed as limiting the disclosure.

In the elaboration of embodiments of the disclosure, unless otherwise explicitly specified and defined, the technical terms such as "mounting", "mutual connection", "connection", "fixing", etc., may be understood in a broad sense, for example, they may be a fixed connection, a detachable connection, or an integrated connection; may be a mechanical connection or an electrical connection; and may be a direct connection or an indirect connection through an intermediate medium, and may be communication between interiors of two elements or interaction between the two elements. For those of ordinary skill in the art, the specific meaning of the above terms in the embodiments of the disclosure can be understood according to specific situations.

Finally, it may be noted that, the foregoing embodiments are merely intended to illustrate rather than limit the technical solutions of the disclosure. Although the disclosure is described in detail with reference to the foregoing optimal embodiments, it will be understood by those of ordinary skill in the art that modifications or equivalent replacements can be made to the technical solutions of the disclosure without departing from the spirit and scope of the technical solutions of the disclosure.

## Claims

1. A terminal-post assembly, comprising a terminal post and a sealing ring, wherein the terminal post comprises a terminal-post body, a base, and a terminal cap, one end of the terminal-post body is connected to the base, the other end of the terminal-post body is connected to the terminal cap, a cross-sectional area of the terminal-post body is smaller than a cross-sectional area of the base, the cross-sectional area of the terminal-post body is smaller than a cross-sectional area of the terminal cap, the sealing ring is sleeved on a periphery of the terminal-post body and located on an upper surface of the base, the sealing ring comprises a sealing-ring body and a plurality of first limiting structures, the plurality of first limiting structures are disposed at one side of the sealing-ring body positioned facing towards an axis of the sealing ring, and the plurality of first limiting structures are spaced apart from each other in a circumferential direction of the sealing-ring body.

2. The terminal-post assembly of claim 1, wherein each of the plurality of first limiting structures has an end portion and a bottom portion, the bottom portion is connected to the sealing-ring body, and the end portion is in clearance fit or interference fit with the terminal-post body.

3. The terminal-post assembly of claim 1, wherein a concentricity between the sealing ring and the terminal post ranges from 0 mm to 0.15 mm.

4. The terminal-post assembly of claim 2, wherein a width of the bottom portion is larger than or equal to a width of the end portion.

5. The terminal-post assembly of claim 4, wherein in a direction from the bottom portion to the end portion, a width of each of the plurality of first limiting structures gradually decreases first and then gradually increases.

6. The terminal-post assembly of claim 4, wherein the end portion defines a first rounded corner, a circle where the first rounded corner is located has a radius ranging from 0.2 mm to 1 mm, the bottom portion defines a second rounded corner, and a circle where the second rounded corner is located has a radius ranging from 0.2 mm to 1 mm.

7. The terminal-post assembly of claim 2, wherein a width of the bottom portion is smaller than a width of the end portion.

8. The terminal-post assembly of claim 2, wherein each of the plurality of first limiting structures further comprises a connecting section, one end of the connecting section is connected to the bottom portion, the other end of the connecting section is connected to the end portion, and the connecting section is bent and extended between the bottom portion and the end portion.

9. The terminal-post assembly of claim 8, wherein the connecting section is bent in a clockwise direction and/or a counter-clockwise direction, and two adjacent connecting sections are bent in opposite directions.

10. The terminal-post assembly of any one of claims 4, 7, and 8, wherein a surface of the end portion positioned facing towards the terminal-post body is an arc surface recessed in a direction away from the terminal-post body, a radius of the arc surface is *r,* a diameter of the terminal-post body is *D,* and a ratio *t* of the radius *r* of the arc surface to the diameter *D* of the terminal-post body satisfies 1/4 ≤ *t* ≤ 3/4.

11. The terminal-post assembly of claim 2, wherein a gap between the end portion and the terminal-post body ranges from 0.05 mm to 0.15 mm.

12. The terminal-post assembly of claim 1, wherein the terminal cap further comprises a second limiting structure, and the second limiting structure is a recess positioned around a sidewall surface of the terminal cap.

13. The terminal-post assembly of claim 12, wherein a distance between a projection of the sealing-ring body on the base and a projection of the terminal cap on the base is smaller than or equal to 0.1 mm.

14. An end cover assembly, comprising an upper plastic member, an end cover, a lower plastic member, and the terminal-post assembly of any one of claims 1 to 13, wherein
the end cover is stacked with the lower plastic member;
the end cover defines a first through-hole for the terminal-post body and the terminal cap to pass through;
the lower plastic member defines a second through-hole for the terminal-post body and the terminal cap to pass through;
the sealing ring is located between the second through-hole and the terminal-post body, and the sealing ring is in interference fit with the end cover;
the base is located on a lower surface of the lower plastic member, the terminal-post body passes through the second through-hole and the first through-hole, and the terminal cap is connected to the upper plastic member;
the upper plastic member comprises a first part, a second part, and a third part where the second part is connected between the first part and the third part, the first part covers a sidewall surface of the end cover and part of an upper surface of the end cover close to the terminal-post body, the second part is located in a gap between the sidewall surface of the end cover and a sidewall surface of the terminal-post body, the third part is located below a part of the end cover close to the terminal-post body, and the third part is located in a gap between the sealing-ring body and the terminal-post body.

15. A battery, comprising at least one end cover assembly of claim 14.

16. An energy-storage apparatus, comprising at least one battery of claim 15.

17. An electricity-consumption device, comprising at least one energy-storage apparatus of claim 16.
